Europäisches Patentamt

European Patent Office

Office européen des brevets

(11) Veröffentlichungsnummer: **0 323 435**
**A2**

## (12) EUROPÄISCHE PATENTANMELDUNG

(21) Anmeldenummer: 88890329.1

(22) Anmeldetag: 23.12.88

(51) Int. Cl.⁴: **C 02 F 1/48**

(30) Priorität: 27.12.87 HU 600187

(43) Veröffentlichungstag der Anmeldung:
05.07.89 Patentblatt 89/27

(84) Benannte Vertragsstaaten:
AT BE CH DE FR GB IT LI LU NL SE

(71) Anmelder: **INTERPAT AG**
**Lettenstrasse 6**
**CH-6343 Rotkreuz (CH)**

(72) Erfinder: **Horvath, Zoltan György**
**Galgoczy köz 7/A**
**H-1125 Budapest (HU)**

**Sörlei, Zsuzsanna**
**Galgoczy köz 7/A**
**H-1125 Budapest (HU)**

(74) Vertreter: **Hübscher, Heiner, Dipl.-Ing. et al**
**Patentanwälte Dipl.-Ing. Gerhard Hübscher, Dipl.-Ing.**
**Helmut Hübscher Dipl.-Ing. Heiner Hübscher**
**Spittelwiese 7**
**A-4020 Linz (AT)**

(54) **Verfahren und Vorrichtung zur Behandlung von Flüssigkeiten mit einem pulsierenden Magnetfeld.**

(57) Nach dem Verfahren werden Flüssigkeiten, insbesondere strömendes Wasser mit einem pulsierenden Magnetfeld behandelt, um vor allem Ablagerungen an den Wandungen von Leitungen und Behältern zu verhindern. Zur Erhöhung der Wirksamkeit und um zu erreichen, daß die für die Ablagerungsbildung kritischen "Poliwasser-Formate" in ihrer Resonanzfrequenz erregt werden, wird die Erregerfrequenz des Magnetfeldes betriebsabhängig aus zwei oder mehreren möglichen Frequenzwerten ausgewählt oder während des Betriebes zwischen vorgegebenen Grenzwerten verändert.

Eine Vorrichtung zur Durchführung des Verfahrens, mit einer Magnetspule, die im Durchtrittsweg einer Flüssigkeit ein pulsierendes Magnetfeld erzeugt, besitzt eine Erregereinheit mit einem auf wenigstens zwei verschiedene Frequenzen einstellbaren Oszillator.

Beschreibung

**Verfahren und Vorrichtung zur Behandlung von Flüssigkeiten mit einem pulsierenden Magnetfeld**

Die Erfindung betrifft ein Verfahren zur Behandlung von Flüssigkeiten, insbesondere von strömenden Flüssigkeiten mit einem pulsierenden Magnetfeld.

Die Erfindung betrifft auch eine Vorrichtung zur Durchführung dieses Verfahrens mit einer Magnetspule, die im Durchtrittsweg dieser Flüssigkeit ein pulsierendes Magnetfeld erzeugt, und einer Erregereinheit für diese Spule.

Verfahren und Vorrichtungen der gegenständlichen Art werden vor allem für die Wasserreinigung bzw. Wasserbehandlung verwendet, wobei durch die Einwirkung des Magnetfeldes Kalksteinablagerungen auf Teilen von Systemen mit offenem oder geschlossenem Kreislauf, insbesondere Rohrwänden, wesentlich verringert werden können.

In der Folge wird häufig statt des Ausdruckes "Flüssigkeit" der Ausdruck "Wasser" verwendet werden, weil sich die experimentellen Ergebnisse meist auf Wasser beziehen. Die dargelegten Überlegungen und Wirkungen gelten aber auch für alle jene Flüssigkeiten, bei denen sich polarisierte Moleküle mit verschiedenen Bindeelementen, z. B. Wasserstoffbrücken in größeren Anhäufungen, sogenannten Poliformen zusammenbinden können.

Grundsätzlich wurden bereits brauchbare Ergebnisse erzielt, als die wissenschaftliche Begründung der Wirkungsweise von Verfahren und Vorrichtungen der gegenständlichen Art noch fehlte und die Ausbildung der jeweiligen Konstruktion aufgrund der Intuition erfolgte. Weiterentwicklungen wurden an Hand praktischer Versuche und der daraus abgeleiteten empirischen Regeln vorgenommen. Es wurden zwei Grundtypen für Vorrichtungen der gegenständlichen Art entwickelt:

Bei der einfacheren Ausführung wird Wasser durch einen sogenannten Wiggler geführt, bei dem ein entsprechendes permanentes Magnetfeld auf das Wasser einwirkt.

Bei der anderen Ausführung wird das Wasser durch ein pulsierendes, wechselndes Magnetfeld geführt, das mit Elektromagneten erzeugt wird, die über Stromimpulse oder über sinusförmigen Wechselstrom betrieben werden.

In beiden Fällen wird eine geometrische Ausbildung des Wasserweges gewählt, von der angenommen wird, daß durch sie die Wechselwirkung zwischen dem Wasser und dem Magnetfeld optimiert wird.

Die Auslegung der Vorrichtungen wurde dadurch erschwert, daß es nicht bekannt war, welche Werte der zu berücksichtigenden Parameter als optimal angesehen werden können. Es wurden unwissenschaftliche Erklärungsversuche unter Einführung von Begriffen wie "magnetisches Wasser" oder "Denkfähigkeit des Wassers" durchgeführt, wobei sich noch dadurch Komplikationen ergaben, daß die gleichen oder ähnlichen Wirkungen experimentell mit Ultraschall oder im elektrischen Feld hervorgerufen werden konnten. Erst nach einschlägigen neuesten Forschungen über den Aufbau des reellen Wassers, dessen Dynamik und die Beeinflussung der Dynamik konnte eine befriedigende Erklärung dafür gefunden werden, warum sich die Anzahl der kristallbildenden Zentren bei einigen Flüssigkeiten unter der Einwirkung eines Magnetfeldes erhöht. Als einschlägige Literatur werden genannt:

(1) J. C. Cowan, D. J. Weintritt: Water formed scale deposits, Golf Publishing Co. Huston, pp 300-306 (1976)

(2) E. C. Gruber, D. D. Carda: Performance Analysis of Permanent Magnetic Type Water Treatment Devices. Final Report to Water Quality Association, South Dacota School of Mines and Technology, Rapid City sd. (1981)

(3) D. Hasson, M. Karmon: US-Patent 4264651 (1981)

(4) D. G. Hibben: Magnetic Treatment of Water, US Dept. of Defense, arpa ord. no.: 1622-3 (1973)

(5) Klaus J. Kronenberg: Experimental evidence for effects of magnetic field on moving water, IEEE. Trans. Mag. MAG-21, 2059-61, (1985)

(6) D. H. Troup, J. A. Richardson: Chem. Eng. Commun. 2,167 (1985)

Die interessierende Erscheinung ist jene, die die Wände von Ablagerungen befreit bzw. die Bildung von Ablagerungen verhindert. Wesentlich ist, daß im Wasser selbst eine Basis gefunden wird, die die Bildung von Kristallen u. dgl. begünstigt und damit verhindert, daß sich Ablagerungen an den Wänden von Rohren usw. bilden. Wenn man die Möglichkeit schafft, im Wasser schwimmfähige Keime für Kristalle zu erzeugen, dann sammeln sich um diese Keime mit der Zeit Kristalle, die mit entsprechenden Filtern aus der Flüssigkeit entfernt oder ohne die Wände der jeweiligen Anlage zu gefährden, im Kreislauf gehalten werden können. Hier soll die Möglichkeit einer Zurücklösung vermindert oder die Bedingung für eine Keimbildung an der Wand reduziert werden. Durch diesen wissenschaftlich begründet erklärten Mechanismus wird die praktische Erfahrung bestätigt, daß durch die Wechselwirkung von Magnetfeldern mit entsprechenden Parametern mit der Flüssigkeit sogar an den Wänden abgelagerte Schichten aufgelöst, zumindest aber ihre Dicken vermindert werden können.

Durch die Forschungen wurde auch festgestellt, daß das äussere Magnetfeld auf die sogenannten Poliwasser-Formationen eine Wirkung hat. Diese Formationen entstehen durch die Bindungen von 20 bis 200 Wassermolekülen mit Wasserstoffbrücken. Durch diese Formationen kann beeinflußt werden, ob die im Wasser gelösten Elemente in prismatischer Form oder in Scheibenform auskristallisieren, wobei prismatische Kristalle und Mikrokristalle sich leicht an der Oberfläche bilden, also an Wandungen ablagern und scheibenförmig kristallisierende Elemente weniger zur Ablagerung neigen.

Die gebundenen Wassermolekülsysteme haben bestimmte eigene Resonanzfrequenzen, die bei der Optimalisierung der Ausbildung günstiger Mikrokristallformen neben der selbstverständlich notwendigen Feldstärke des Magnetfeldes berücksichtigt werden müßten.

Aufgabe der Erfindung ist die Schaffung eines Verfahrens und einer Vorrichtung der genannten Art, mit dem bzw. der die Ablagerungsbildung an Wandungen weitgehend verringert werden kann und damit Wirkungsgrad und Wirksamkeit der bisherigen Verfahren und Vorrichtungen verbessert wird.

Das erfindungsgemäße Verfahren ist dadurch gekennzeichnet, daß die Erregerfrequenz des Magnetfeldes betriebsabhängig aus zwei oder mehreren möglichen Frequenzwerten ausgewählt oder während des Betriebes zwischen vorgegebenen Grenzwerten verändert wird.

Die Erfindung beruht auf der Erkenntnis, daß die Frequenz des Magnetfeldes und die Dauer seiner Einwirkung auf die Flüssigkeit wesentliche, zu berücksichtigende Parameter darstellen. Es sind also diese Parameter zusätzlich zu den physikalisch-chemischen Parametern der gegebenen Flüssigkeit, der auftretenden Strömungsgeschwindigkeit und dem sich aus der mechanischen Ausbildung des verwendeten Gerätes er gebenden Wechselwirkungsvolumen zu beachten. Wesentlich ist für die Erfindung, daß ein Magnetfeld benützt wird, das nicht dauernd mit konstanter Frequenz pulsiert, sondern das mindestens zwischen zwei Frequenzen geändert werden kann, von denen die eine entsprechend den experimentellen Ergebnisse sich für die jeweilige Flüssigkeit als optimal zeigt. Dieser optimale Bereich kann sich für einen konkreten Fall mit der Zeit ändern, da die Qualität einer Quelle oder eines Wasserversorgungsnetzes hinsichtlich der physikalisch-chemischen Eigenschaften nicht konstant sein muß.

Es wurde erkannt, daß die Größen der "Poliwasser-Formate" sich voneinander stark unterscheiden und innerhalb einer Flüssigkeit einer bestimmten Größenverteilung folgen können. Aus diesem Grund kann keine konstante Resonanzfrequenz erwartet werden, weshalb es sinnvoll ist, die Erregerfrequenz betriebsabhängig aus zwei oder mehreren möglichen Frequenzwerten auszuwählen oder nach der anderen Variante zwischen vorgegebenen Grenzwerten zu verändern, damit die Flüssigkeit jeweils mit der für sie günstig erscheinenden Frequenz behandelt wird. Bei der zweiten Variante ist es möglich, die Erregerfrequenz zwischen den vorgegebenen Grenzwerten stetig zu verändern.

Ferner hat sich herausgestellt, daß es günstig ist, wenn die Wechselwirkung im Resonanzbereich wenigstens drei Perioden lang dauert, was bei den zur Durchführung des erfindungsgemäßen Verfahrens bestimmten Vorrichtungen zu beachten ist.

Zur Durchführung des erfindungsgemäßen Verfahrens wird eine Vorrichtung der eingangs genannten Art vorgesehen, die sich dadurch auszeichnet, daß die Erregereinheit einen auf wenigstens zwei verschiedenen Frequenzen einstellbaren Oszillator VFO aufweist. Nach einer Möglichkeit kann hier der Verbraucher selbst auswählen, mit welcher Frequenz die optimale Wirkung erzielt wird und den Oszillator entsprechend einstellen. Dabei kann selbstverständlich eine Einstellung nicht nur zwischen zwei, sondern zwischen mehreren Frequenzen oder sogar eine stufenlose Veränderung der Frequenz vorgesehen sein. Zweckmäßig wird in jedem Fall möglichst auf die Resonanzfrequenz der Poliwasser-Formate eingestellt.

Die Magnetspule zur Erzeugung des Magnetfeldes kann als die oder ein Teil der Induktivität des Oszillators geschaltet sein, wenn dieser als Schwingkreis gebaut ist. Unter dem Ausdruck "Oszillator" sind aber auch Einrichtungen zu verstehen, die nicht unbedingt Sinuswellen erzeugen.

Nach einer bevorzugten Ausführung ist zur Steuerung des auf verschiedenen Frequenzen einstellbaren Oszillators VFO ein Steueroszialltor VO mit konstanter Frequenz vorgesehen, der mit seinen Ausgangssignalen die Betriebsfrequenz des einstellbaren Oszillators zwischen zwei Grenzwerten stetig verändert und diese Frequenz moduliert. Bei dieser stetigen Veränderung der Frequenz wird erreicht, daß die wichtigste Resonanzfrequenz für die jeweilige Flüssigkeit sicher angesprochen und auch unterschiedliche poliformatische Gefüge in Resonanz gebracht werden.

Die Erregerfrequenz des einstellbaren Oszillators VFO ist vorzugsweise zwischen 70 und 500 kHz einstellbar, weil die übliche Resonanzfrequenz der meisten Polarflüssigkeiten in diesem Frequenzbereich liegt.

Es ist möglich, einen Impulse mit rechteckiger Signalform erzeugenden, einstellbaren Oszillator vorzusehen. Für andere Fälle kann ein Impulse mit dreieckiger Signalform bzw. Impulse mit sägezahnförmiger Signalform erzeugenden, einstellbarer, d. h. in der Frequenz veränderbarer Oszillator vorgesehen werden, wobei auch die Impulsdauer im Verhältnis zur Periodenzeit einstellbar sein kann.

Nach einer vorteilhaften Weiterbildung ist die niedrigste Erregerfrequenz des Oszillators in Abhängigkeit von der möglichen, größten Strömungsgeschwindigkeit der Flüssigkeit und den Abmessungen des erzeugten Magnetfeldes in seinem Einwirkungsbereich auf die Flüssigkeit so gewählt, daß die Verweilzeit der Flüssigkeit im Magnetfeld wenigstens drei vollständige Wechselperioden dauert. Hier läßt sich die niedrigste Erregerfrequenz ziffernmäßig einfach so bestimmen, daß der kleinste Wert dieser Frequenz höher sein muß als ein Drittel der in der Anlage erreichbaren größten Strömungsgeschwindigkeit geteilt durch den von der Flüssigkeit im Magnetfeld zurückgelegten Weg.

**Patentansprüche**

1. Verfahren zur Behandlung von Flüssigkeiten, insbesondere von strömenden Flüssigkeiten mit einem pulsierenden Magnetfeld, dadurch gekennzeichnet, daß die Erregerfrequenz des Magnetfeldes betriebsabhängig aus zwei oder mehreren möglichen Frequenzwerten ausgewählt oder während des Betriebes zwischen vorgegebenen Grenzwerten verändert wird.

2. Verfahren nach Anspruch 1, dadurch gekennzeichnet, daß die Erregerfrequenz zwischen den vorgegebenen Grenzwerten stetig verändert wird.

3. Vorrichtung zur Durchführung des Verfahrens nach Anspruch 1 oder 2, mit einer Magnetspule, die im Durchtrittsweg einer Flüssigkeit ein pulsierendes Magnetfeld erzeugt und einer Erregereinheit für diese Spule, dadurch gekennzeichnet, daß die Erregereinheit einen auf wenigstens zwei verschiedene Frequenzen einstellbaren Oszillator (VFO) aufweist.

4. Vorrichtung nach Anspruch 3, dadurch gekennzeichnet, daß die Magnetspule als die oder ein Teil der Induktivität des Oszillators geschaltet ist.

5. Vorrichtung nach Anspruch 3 oder 4, dadurch gekennzeichnet, daß zur Steuerung des auf verschiedene Frequenzen einstellbaren Oszillators (VFO) ein Steueroszillator (VO) mit konstanter Frequenz vorgesehen ist, der mit seinen Ausgangssignalen die Arbeitsfrequenz des einstellbaren Oszillators zwischen zwei Grenzwerten stetig verändert und diese Frequenz moduliert.

6. Vorrichtung nach einem der Ansprüche 3 bis 5, dadurch gekennzeichnet, daß die Erregerfrequenz des einstellbaren Oszillators zwischen 70 und 500 kHz einstellbar ist.

7. Vorrichtung nach einem der Ansprüche 3 bis 6, dadurch gekennzeichnet, daß ein Impulse mit einer rechteckigen Signalform erzeugender, einstellbarer Oszillator vorgesehen ist.

8. Vorrichtung nach einem der Ansprüche 3 bis 6, dadurch gekennzeichnet, daß ein Impulse mit einer dreieckigen Signalform erzeugender, einstellbarer Oszillator vorgesehen ist.

9. Vorrichtung nach einem der Ansprüche 3 bis 6, dadurch gekennzeichnet, daß ein Impulse mit einer sägezahnförmigen Signalform erzeugender, einstellbarer Oszillator vorgesehen ist.

10. Vorrichtung nach einem der Ansprüche 3 bis 9, dadurch gekennzeichnet, daß die niedrigste Erregerfrequenz des Oszillators in Abhängigkeit von der möglichen, größten Strömungsgeschwindigkeit der Flüssigkeit und den Abmessungen des erzeugten Magnetfeldes so gewählt ist, daß die Verweilzeit der Flüssigkeit im Magnetfeld wenigstens drei vollständige Wechselperioden dauert.